# EUROPEAN PATENT APPLICATION

(11) **EP 1 921 568 A2**
(43) Date of publication of application: **14.05.2008**
(21) Application number: 07021925.8
(22) Date of filing: 12.11.2007
(51) Int. Cl.: G06K 9/32, B07C 3/14

(54) **Label area detecting apparatus, label area detecting method used in same, and label area detection control program**

(30) Priority: 13.11.2006 JP 2006306771
(71) Applicant: NEC Corporation, Minato-ku Tokyo (JP)
(72) Inventor: Kondoh, Katsuhiko, Tokyo (JP); Nishiwaki, Daisuke, Tokyo (JP); Akiyama, Tatsuo, Tokyo (JP)
(74) Representative: Glawe, Delfs, Moll

(57) **Abstract**

A label area detecting apparatus is provided in which, even if an area occupied by a label being an object to be detected and a background area are made up of pixels belonging to color distribution similar to each other, the area occupied by the label is easily separated from the background area and a background area covered by a label is smoothly reproduced. An image of an object to be detected obtained by photographing is sequentially input and stored as a plurality of detected images and a label area in one given detected image is filled with an area in which no label is stuck in other detected images to output a background image and a differential image between the background image and detected image input after production of the background image is obtained by a differential image producing means to produce a label image.

## Description

### BAGKGROUND OF THE INVENTION

### Fiel of the Invention

The present invention relates to a label area detecting apparatus, a label area detecting method to be used in the label area detecting apparatus, and a label area detection control program and more particularly to the label area detecting apparatus that can be suitably used when an area for an address label or a like stuck on an object to be detected is detected from an image obtained by photographing the object to be detected such as a sealed letter, postal card, magazine, newspaper, package, label area detecting method to be used in the label area detecting apparatus, and label area detection control program.

### Description of the Related Art

When a differentiation is made among zip codes and/or addresses written in a sealed letter, postal card, magazine, newsletter, package, or a like by using an OCR (Optical Character Reader), in many cases, the zip code, address, or a like to be read are written on a label or in a box and, therefore, the process of detecting an area (hereinafter, referred to as a "label area") corresponding to a label or box is effective as preprocessing of reading of characters. To achieve this, an apparatus for detecting a label area is manufactured.

Conventional technology of this type is disclosed in, for example, Patent Reference 1 (Japanese Patent Application Laid-open No. 2001-312695, Abstract, Fig. 1). In the label area detecting apparatus disclosed in the Patent Reference 1, an object to be detected by a color scanner is photographed and image data obtained by the photographing of the object to be detected is stored in an image memory. Color components of a label is stored in the label color storing section. Then, image data stored in the image memory is compared by an image comparing section with color components of a label stored in the above label color storing section and image data is created. In this case, image data within a range of color components of each pixel stored in the label color storing section is produced by the image comparing section. Then, a label area is detected by the label area detecting section, based on image data corresponding to only color components of a label produced by the image comparing section. Here, in the label area detecting section, pixels of image data on only color components of a label created in the above image comparing section are counted in each of vertical and horizontal directions to produce a histogram and an area in which counted values in each of the vertical and horizontal directions exceed a specified threshold is selected as a candidate to detect a label area based on a size or position of the candidate.

However, the above conventional label area detecting apparatus has the following problems. That is, in the label area detecting apparatus disclosed in the Patent Reference 1, since information about color components is used to separate a label area being an object to be detected from a background area, when the label area and background area are made up of pixels belonging to color distribution similar to each other, it is made difficult to separate the label from the background area. Moreover, a label area is detected for every piece of an input image and, therefore, it is also made difficult to reproduce a background area corresponding to a portion covered by a label.

### SUMMARY OF THE INVENTION

In view of the above, it is an obj ect of the present invention to provide a label area detecting apparatus in which, even when a label area and a background area are made up of pixels belonging to color distribution similar to each other, the label area can be easily separated from the background area and a background area of a portion covered by a label is reproduced, a label area detecting method to be used in the label area detecting apparatus, and a label area detection control program.

According to a first aspect of the present invention, there is provided a label area detecting apparatus for detecting a label area from an image of a detecting object to part of which a label is stuck including:
an image inputting and storing means to sequentially input images of a plurality of detecting objects and to store the input images as a plurality of detected images;
a background image synthesizing and producing means to produce a background image having no image of a label by using the plurality of detecting objects stored in the image inputting and storing means to fill an image of an area in which the label is stuck in one given image out of the detected images with an image of an area in which no label is stuck in other the detected images and to synthesize these images; and
a label image producing means to produce a label image corresponding to the label area by obtaining a differential image between the background image produced by the background image synthesizing and producing means and the detected image input after production of the background image.

In the foregoing, a preferable mode is one wherein the image inputting and storing means includes:
a photographing means to obtain the detected images by photographing an entire of each of the detecting objects; and
a detected image storing means to accumulate a plurality of detected images obtained by the photographing means,
wherein a background image synthesizing and producing means includes:
a positioning means to shift each of the plurality of detected images accumulated in the detected image storing means in a specified direction to achieve positioning;
a background image producing means to produce the background image by using the plurality of detected objects positioned by the positioning means;
a background image evaluating means to make a check of the background images produced by the background image producing means to confirm that the background image does not contain an image corresponding to the label; and
a background image storing means to accumulate the background images confirmed by the background image evaluating means,
wherein the label image producing means includes:
a differential image producing means to produce a differential image between the background image accumulated by the background image storing means and the detected image input to the detected image storing means after production of the background image; and
a differential image outputting means to output the differential image produced by the differential image producing means as the label image.

Also, a preferable mode is one that wherein includes a feature point extracting means to extract an area having a specified common shape from the plurality of detected images accumulated in the detected image storing means and also to extract a feature point of the area having the specified shape for every detected image; and
a feature point storing means to store a position of each feature point extracted by the feature point extracting means,
wherein the positioning means is configured to position the detected images by using a position of each of the feature points stored in the feature point storing means to shift each of the plurality of detected images stored by the detected image storing means in a specified direction.

Also, a preferable mode is one wherein the background image producing means is configured to make a reference to the plurality of detected images positioned by the positioning means and to synthesize areas each having no change to produce the background image.

Also, a preferable mode is one wherein the background image evaluating means is configured to judge the background image produced by the background image producing means as a correct background image when the background image is produced by using preset specified pieces or more of the detected images.

Also, a preferable mode is one wherein the background image evaluating means is configured to judge the background image produced by the background image producing means as a correct background image when there exist pixels exceeding pre-determined specified numbers in detected images each being shifted by the positioning means in a specified direction and existing in a same position as in the background image exceeding pre-determined specified numbers and being within a range of predetermined pixel values.

Also, a preferable mode is one wherein the background image evaluating means is configured to recognize the background image in an area preset in the detected image.

According to a second aspect of the present invention, there is provided a label area detecting method to be used for a label area detecting apparatus for detecting a label area from an image of a detecting object to part of which a label is stuck, the method including:
image input storing processing of sequentially inputting images of a plurality of detecting objects and storing the input images as a plurality of detected images;
background image synthesizing and producing processing of producing a background image having no image of a label by using the plurality of detecting objects stored in the image inputting and storing means to fill an image of an area in which the label is stuck in one given image out of the detected images with an image of an area in which no label is stuck in other detected images and of synthesizing these images; and
label image producing processing of producing a label image corresponding to the label area by obtaining a differential image between the background image produced by the background image synthesizing and producing means and the detected image input after production of the background image.

In the foregoing, a preferable mode is one wherein the image input storing processing includes:
a photographing process of obtaining the detected images by photographing an entire of each of the detecting objects; and
a detected image storing process of accumulating a plurality of detected images obtained by the photographing processing,
wherein background image synthesizing and producing processing includes:
a positioning process of shifting each of the plurality of detected images accumulated by the detected image storing process in a specified direction to achieve positioning;
a background image producing process of producing the background image by using the plurality of detected objects positioned by the positioning process;
a background image evaluating process of making a check of the background images produced by the background image producing process of confirming that the background image does not contain an image corresponding to the label; and
a background image storing process of accumulating the background images confirmed by the background image evaluating process,
wherein the label image generating processing includes:
a differential image producing process of producing a differential image between the background image accumulated by the background image storing process and the detected image input to the detected image storing process after the production of the background image; and
a differential image outputting process of outputting the differential image produced by the differential image producing process as the label image.

Also, a preferable mode is one that wherein includes a feature point extracting process of extracting an area having a specified common shape from the plurality of detected images accumulated in the detected image storing process and also of extracting a feature point of the area having the specified shape for every detected image; and
a feature point storing process of storing a position of each feature point extracted by the feature point extracting process, wherein, in the positioning process, the detected images are positioned by using a position of each of the feature points stored by the feature point storing process to shift each of the plurality of detected images stored by the detected image storing process in a specified direction.

Also, a preferable mode is one wherein, in the background image producing processing, a reference is made to the plurality of detected images positioned by the positioning process and areas having no change are synthesized to generate the background image.

Also, a preferable mode is one wherein, in the background image evaluating process, the background image produced by the background image generating process is judged as a correct background image when the background image is produced by using preset specified pieces or more of the detected images.

Also, a preferable mode is one wherein, in the background image evaluating process, the background image produced by the background image process is judged as a correct background image when there exist pixels exceeding pre-determined specified numbers in detected images each being shifted by the positioning process in a specified direction and existing in a same position as in background images exceeding pre-determined specified numbers and being within a range of predetermined pixel values.

Also, a preferable mode is one wherein, in the background image evaluating process, the background image in an area preset in the detected image is recognized.

According to a third aspect of the present invention, there is provided a label area detecting control program to make a computer control the label area detecting method described above.

With the above configuration, images of a plurality of detecting objects are input by the image input storing means and are stored as a plurality of detected images. By using a plurality of detected images stored in the image input storing means, an image of an area in which a label is stuck in one given detected image is synthesized with an image of an area in which no label is stuck in another detected image to produce a background image. A differential image between a background image produced by the background image synthesizing and producing means and a background image input after production of the background is obtained by the label image producing means and, therefore, an area being occupied by a label being an object to be detected and a background area are made up of pixels belonging to color distribution similar to each other, a background image of a portion covered by the label can be smoothly produced and the area occupied by the label can be also smoothly detected.

Moreover, appropriateness of a background image produced by the background image producing means as a background image is judged by the background image evaluating means and the background image, if it is produced by using the detected image exceeding a pre-determined specified number, is judged to be appropriate as the background image. This enables highly-reliable background image. Moreover, the background image, if there exist pixels exceeding pre-determined specified numbers in the detected images each being shifted by the positioning means in a specified direction and existing in the same position as in the background images exceeding pre-determined specified numbers and being within a range of predetermined pixel values, judges that the background image is a correct background image. This enables highly-reliable background image. In an area preset in the detected image, the background image is judged as a correct background image and is output. As a result, even if an image photographed by the photographing means is missed, a background image can be smoothly produced.

Additionally, a feature point having a specified shape is extracted by the feature point extracting means for every detected image and each of the extracted feature points is stored in the feature point storing means and, by using a position of each feature point stored in the feature point storing means, a plurality of detecting images is positioned by the positioning means so that each feature point is fittingly placed and, therefore, the same effects as above can be obtained by comparatively simple positioning processing.

### BRIEF DESCRIPTION OF THE DRAWINGS

The above and other objects, advantages, and features of the present invention will be more apparent from the following description taken in conjunction with the accompanying drawings in which:
Fig. 1 is a block diagram showing electrical configurations of a label area detecting apparatus according to a first embodiment of the present invention;
Fig. 2 is a flowchart explaining operations of the label area detecting apparatus of Fig. 1;
Fig. 3 is a diagram showing examples of an input image;
Fig. 4 is a diagram showing examples of another input image having the same background as Fig. 3;
Fig. 5 is a diagram showing examples of still another input image having the same background as Fig. 3;
Fig. 6 is a diagram showing examples of a generated background;
Fig. 7 is a diagram showing examples of a detected image to be obtained after the production of an background image and to be output from a detected image storing means having the same background as Fig. 3;
Fig. 8 is a diagram showing an example of a differential image;
Fig. 9 is a block diagram showing electrical configurations of a label area detecting apparatus according to a second embodiment of the present invention;
Fig. 10 is a flowchart explaining operations of the label area detecting apparatus of Fig. 9; and
Fig. 11 is a diagram to explain the positioning of a plurality of detected images using feature points.

### DETAILED DESCRIPTION OF THE PREFERRED EMBODIMENTS

Best modes of carrying out the present invention will be described in further detail using various embodiments with reference to the accompanying drawings. A label area detecting apparatus in which, even when an area occupied by a label being an object to be detected and a background area are made up of pixels belonging to color distribution similar to each other, the area occupied by the label is separated from the background area and background image of a portion covered by the label is reproduced, a label area detecting method to be used in the label area detecting apparatus, and a label area detecting control program are provided.

### First Embodiment

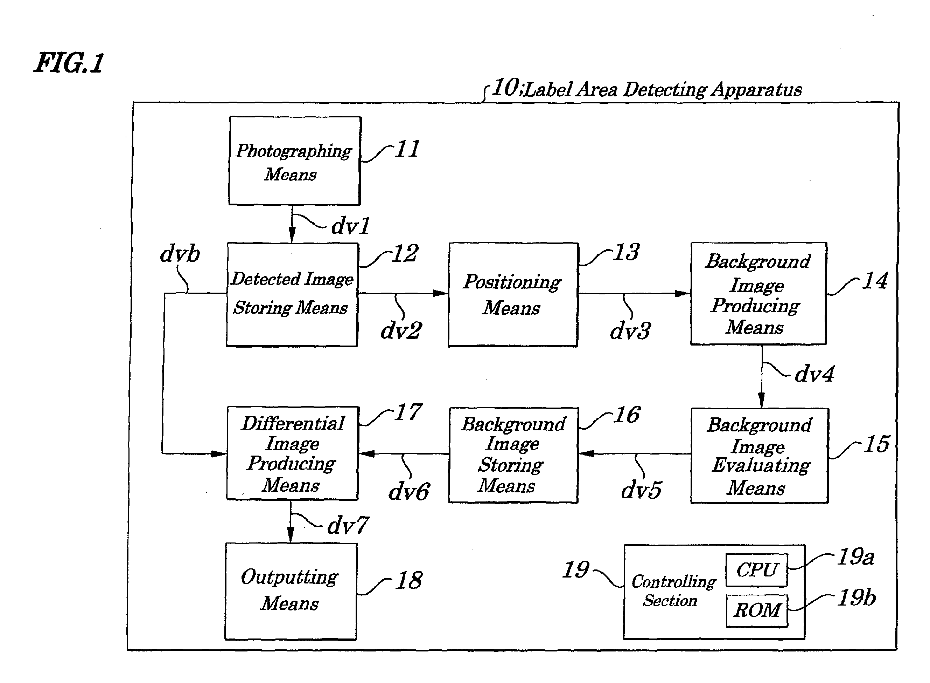

Figure 1 is a block diagram showing electrical configurations of a label area detecting apparatus 10 of the first embodiment of the present invention. The label area detecting apparatus 10 of the first embodiment includes, as shown in Fig. 1, a photographing means 11, a detected image storing means 12, a positioning means 13, a background image producing means 14, a background image evaluating means 15, a background image storing means 16, a differential image producing means 17, an outputting means 18, and a controlling section 19. The photographing means 11 is made up of, for example, a color scanner and is configured to photograph an entire detecting object to a part of which a label (for example, a postal card to which a label with an address is stuck) is stuck to obtain a detected image dv1. The detected image storing means 12 is made up of, for example, a RAM (Random Access Memory) and is configured to successively receive the detected images dv1 obtained by the photographing means 11 and to accumulate a plurality of detected images and to output the images as a plurality of detected images dv2 and, at the same time, to continue accumulating the detected images dv1 being input at the present period of time and outputting the images as the detected image dvb.

The positioning means 13 shifts each of the detected images dv2 output from the detected image storing means 12 in a specified direction to achieve positioning and outputs a plurality of detected images dv3. The background image producing means 14 produces a background image dv4 having no label by using a plurality of detected images dv3 output from the positioning means 13. Especially, according to the first embodiment, the background image producing means 14 fills an area having a label in one given detected image dv3 with an area having no label in other detected image dv3 by making a reference to the plurality of detected images dv3 already positioned by the positioning means 13 to synthesize both the areas to produce a background image dv4. Moreover, the background image producing means 14 has a high-resolution image producing function of producing the background image dv4 with high resolution.

The background image evaluating means 15 checks the background image dv4 produced by the background image producing means 14 to confirm that an image of a label is not contained in the background image dv4 and then to output the image as a background image dv5. In the first embodiment in particular, the background image evaluating means 15, if the background image dv4 are produced by using specified or more pieces of the detected images dv3, judges that the background image dv4 is a correct background image and outputs the background image dv5. The background image evaluating means 15, when there exist pixels exceeding pre-determined specified numbers in the detected images dv3 each being shifted by the positioning means 13 in a specified direction and existing in the same position as in the background images dv4 exceeding pre-determined specified numbers and being within a range of predetermined pixel values, judges that the background image is a correct background image and outputs the background image dv5. Moreover, the background image evaluating means 15 judges that the background image is correct and is output as the background image dv5 in an area pre-set in the detected image dv3.

The background image storing means 16 is made up of, for example, RAMs and is configured to accumulate the background images dv5 output from the background image evaluating means 15 and to output the accumulated images as a background image dv6. The differential image producing means 17 produces a differential image dv7 between the background image dv6 output from the background image storing means 16 and detected image dvb input to and output from a detected image storing means 12 at the present point of time after the production of the background image dv6. The outputting means 18 outputs the differential image dv7 produced by the differential image producing means 17 as a label image. The control section 19 has a CPU (Central Processing Unit) 19a serving as a computer to control the entire label area detecting apparatus 10 and a ROM (Read Only Memory) 19h to store a label area detection control program to actuate the CPU 19a.

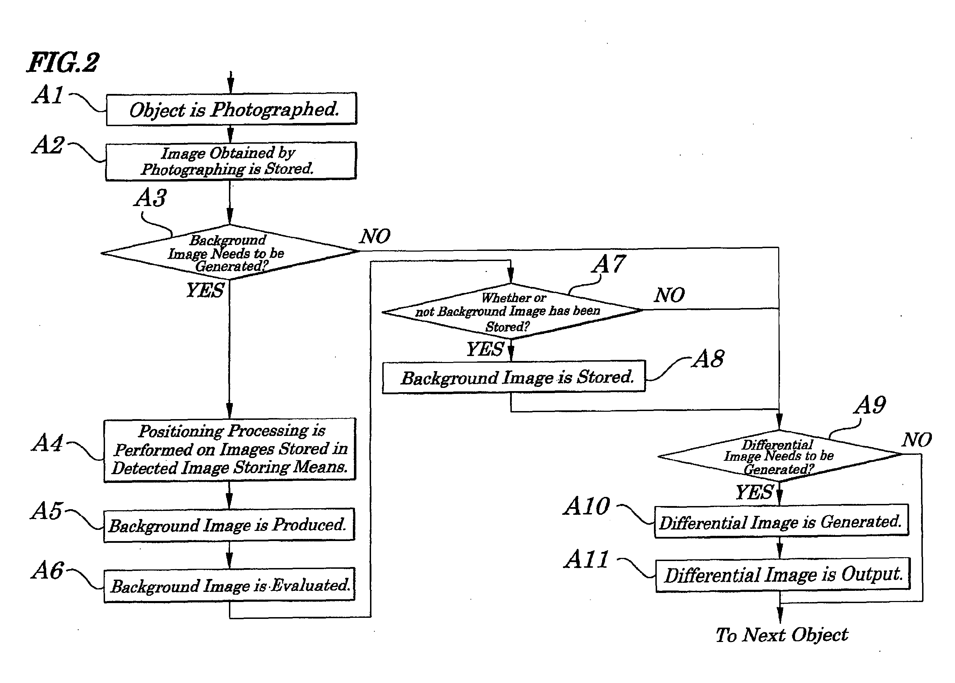

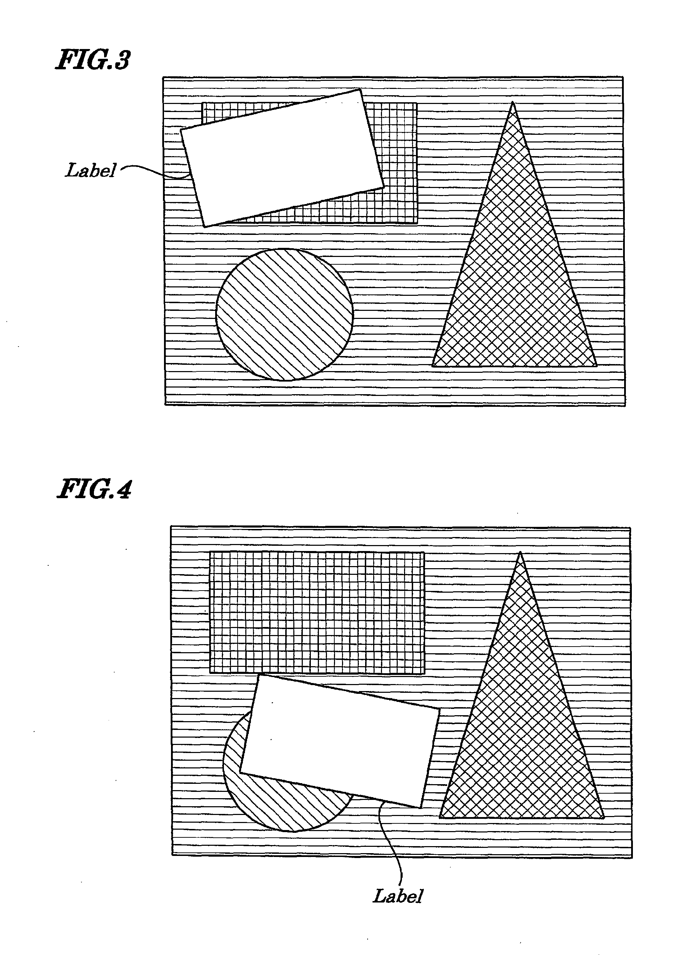

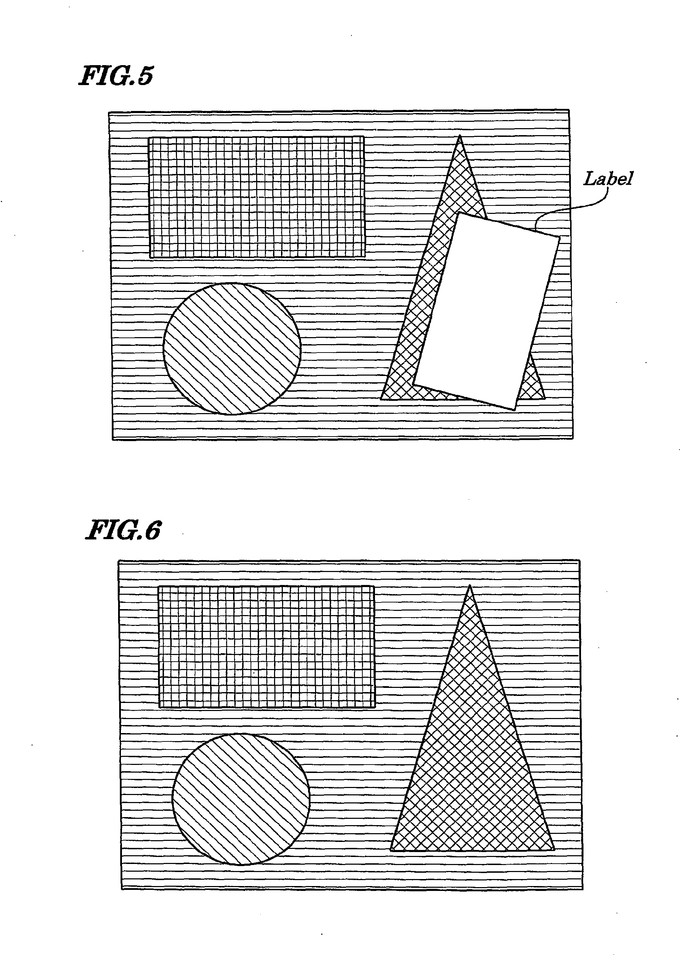

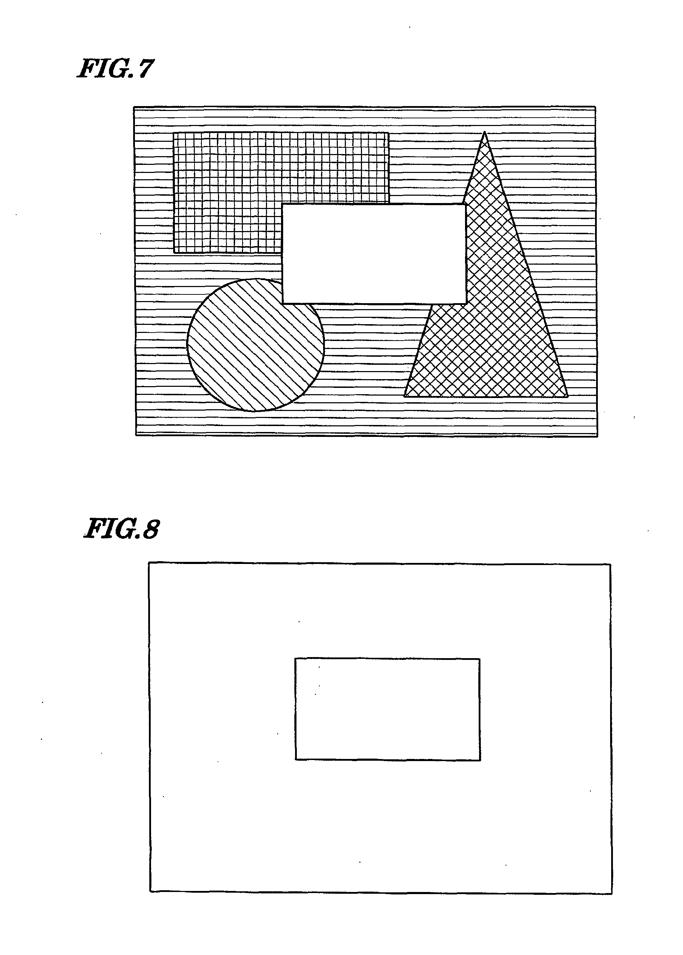

Figure 2 is a flowchart explaining operations of the label area detecting apparatus 10 of Fig. 1. Figure 3 is a diagram showing examples of an input image dv1. Figure 4 is a diagram showing examples of another input image dv1 having the same background as in Fig. 3. Figure 5 is a diagram showing examples of still another input image dv1 having the same background as in Fig. 3. Figure 6 is a diagram showing examples of a produced background image dv4. Figure 7 is a diagram showing examples of a detected image dvb to be obtained after the production of an background image and to be output from a detected image storing means having the same background as in Fig. 3. Figure 8 is a diagram showing an example of a differential image dv7.

By referring to these drawings, processing in the label area detecting method employed in the label area detecting apparatus 10 of the embodiment is described below. In the label area detecting apparatus 10, a plurality of detecting objects all having a label in each different position is photographed by the photographing means 11 and a plurality of images obtained by the photographing is sequentially input to the detected image storing means 12 and stored as a plurality of detected images dv2. Then, by the positioning means 13, background image producing means 14, background image evaluating means 15, and background image storing means 16, an image of an area in which a label is stuck in one given detected image dv2 is filled, by using the plurality of detected images dv2 stored by the image inputting and storing processing, with an image of an area in which no label is stuck in other detected images dv2 to produce a background image dv6 corresponding to a background image having no image of a label (background image synthesizing and producing processing). By the differential image producing means 17 and outputting means 18, the differential image dv7 between the background image dv 6 output from the background image synthesizing and producing processing and the detected image dvb input after production of the background image dv6 is obtained to produce a label image corresponding to an area occupied by the label (label image producing processing).

That is, an entire detecting object is photographed by the photographing means 11 (photographing processing, Step A1).Then, a plurality of detecting objects is photographed in a similar manner and, as a result, a plurality of detected images dv1 is stored in the detected image storing means 12 (detected image storing processing, Step A2).

After the plurality of detected images dv1 has been stored, the necessity for producing a background image is judged (Step A3). At this time point, for example, in the case where a background image has been already produced or no detected images dv1 sufficient in number for producing a background image have not been stored, the answer becomes "NO" in Step A3. In the case where it is judged that a background image needs to be produced ("YES"), the processing proceeds to the production of the background image.

In the process of the production of a background image, positioning processing is first performed by the positioning means 13 on a plurality of detected images dv2 output from the detected image storing means 12 (positioning processing, Step A4) . The positioning processing of the embodiment in particular is performed in a manner in which values (or, a gray value, R (red), G (green), or B (blue) value) of each pixel making up each of the detected images dv2 become the same as much as possible. For example, the first piece of the detected image dv2 is taken from the detected image storing means 12 and the taken image is used as a reference image. Then, the second piece of the detected image dv2 is taken from the detected image storing means 12 and the difference in pixel value between the first piece (reference image) and second piece of the detected image dv2 is calculated for all pixels and further a total sum thereof is obtained. Next, the second piece of the image is shifted by one pixel in a vertical direction and a total sum of the difference in the pixel value is calculated in the same manner as above. The similar calculation is performed on images within a predetermined range in vertical and horizontal directions and the positions where the total sum of the difference is the smallest are used as a result from the positioning. Moreover, the positions where the total sum of the difference in pixel value between the first piece and third or fourth pieces of the images becomes the smallest are further obtained and the positioning is sequentially performed on each of the obtained positions.

Next, a plurality of detected images dv3 for which the positioning has been completed is synthesized by the background image producing means 14 to produce a background image dv4 (background image producing processing, Step A5) . Objects to be detected as the detected image dv1 in the embodiment are space images having background images of the same type and a part of each of the space images is covered by a label and, in general, as shown in, for example, Figs. 3, 4, and 5, the detection of objects is made based on the premise that a position of a label is changed every time the detection is made. Here, the above space image refers to an image displaying a surface on which a label is stuck. Therefore, in the background image producing means 14, when a plurality of the detected images dv3 is synthesized, a plurality of space images is referenced to and portions in which no change occurs are synthesized to produce the background image dv4. In this case, a space image (that is, a background image) having no image of a label is produced by filling a part of the image area in a space image covered by a label with a space image covered with another label. Also, according to the embodiment, a high-resolution image producing processing to produce a high-resolution background image is performed by a high-resolution image producing function of the background image producing means 14 using an image synthesizing method disclosed in, for example, Japanese Patent Laid-open No. Hei 10-69537 and the background image in Fig. 6 is produced from a space image shown in Figs. 3, 4, and 5.

Next, appropriateness of the background image dv4 produced by the background image producing means 14 as a background image is judged by the background image evaluating means 15 (background image evaluating processing, Step A6). In this case, the background image dv4, if it is produced by using the detected image dv3 exceeding a pre-determined specified number, is judged to be appropriate as a background image. This enables a background image with high reliability to be generated. Also, the background image dv4, if there exist pixels exceeding pre-determined specified numbers in the detected images dv3 each being shifted by the positioning means 13 in a specified direction and existing in the same position as in the background images dv4 exceeding pre-determined specified numbers and being within a range of predetermined pixel values, judges that the background image is a correct background image and outputs the background image dv5. This enables a background image with higher reliability to be produced. In a preset area in the detected image dv5, the background image dv4 is judged as a correct background image and is output as a background image dv5. This enables the smooth production of the background image dv4 even if an image obtained by the photographing means 11 is partially missed.

When the background image dv4 is judged to be appropriate as a background image, the background image dv5 is transmitted from the background image evaluating means 15 to the background image storing means 16 (background image storing processing, Steps A7 and A8) . When the background image dv5 is stored in the background image storing means 16 at Step A8 or when a background image has been already stored and it is judged that no production of a new background image is required (Step A9), a differential image dv7 (see Fig. 8) between the background image dv6 output from the background storing means 16 and the detected image dvb (see Fig. 7) output from the detected image storing means 12 is produced by the differential image producing means 17 (difference image producing processing, Step A10) . The produced image dv7 is considered as a label image and is output as a final result from the outputting means 18 (difference image outputting processing, Step A11).

Thus, according to the first embodiment, images of detecting objects that are photographed by the photographing means 11 are sequentially input to the detected image storing means 12 and stored as a plurality of detected images dv2. Then, by the positioning means 13, background image producing means 14, background image evaluating means 15, and background image storing means 16, an image of an area in which a label is stuck in one given detected image dv2 is filled, by using the plurality of detected images dv2 stored in the detected image storing means 12, with an image of an area in which no label is stuck in other detected images dv2 to produce a background image dv6 corresponding to a background image having no image of a label. By the differential image producing means 17 and outputting means 18, the differential image between the background image dv6 and the detected image dvb input after the production of the background image dv6 is obtained to produce a label image corresponding to an area occupied by the label. As a result, even if an area occupied by a label being an object to be detected and a background area are made up of pixels belonging to color distribution similar to each other, a background image dv6 of a portion covered by a label can be smoothly produced and an area occupied by the label is also smoothly detected.

### Second Embodiment

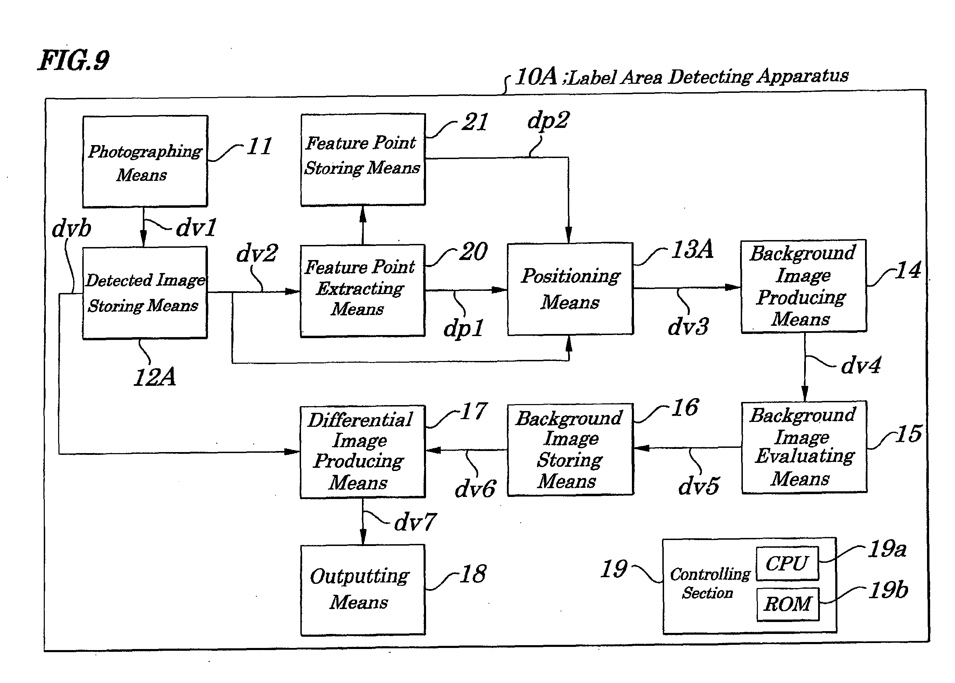

Figure 9 is a block diagram showing electrical configurations of a label area detecting apparatus according to a second embodiment of the present invention. In Fig. 9, the same reference numbers are assigned to components having the same functions as in the first embodiment in Fig. 1.

The label area detecting apparatus 10A of the second embodiment includes, instead of the detected image storing means 12 and positioning means 13 shown in Fig. 1, a detected image storing means 12A and positioning means 13A both having configurations different from those in Fig. 1, a feature point storing means 21 and a feature point extracting means 20 as new components. The detected image storing means 12A has the same function as the detected image storing means 12, however, it is connected to the feature point extracting means 20 and the positioning means 13A. The feature point extracting means 20 extracts areas having specified shapes being common through images from a plurality of detected images dv2 accumulated in the detected image storing means 12A and also extracts a feature point dp1 of the area having the specified shape for every detected image dv2. The feature point storing means 21 stores a position dp2 of each feature point dp1 extracted by the feature point extracting point 20. The positioning means 13A, by using the position dp2 of each feature point dp1 stored in the feature point storing means 21, shifts each of the plurality of detected images dv2 stored in the detected image storing means 12A in a specified direction for positioning. Operations other than this are the same as those in Fig. 1.

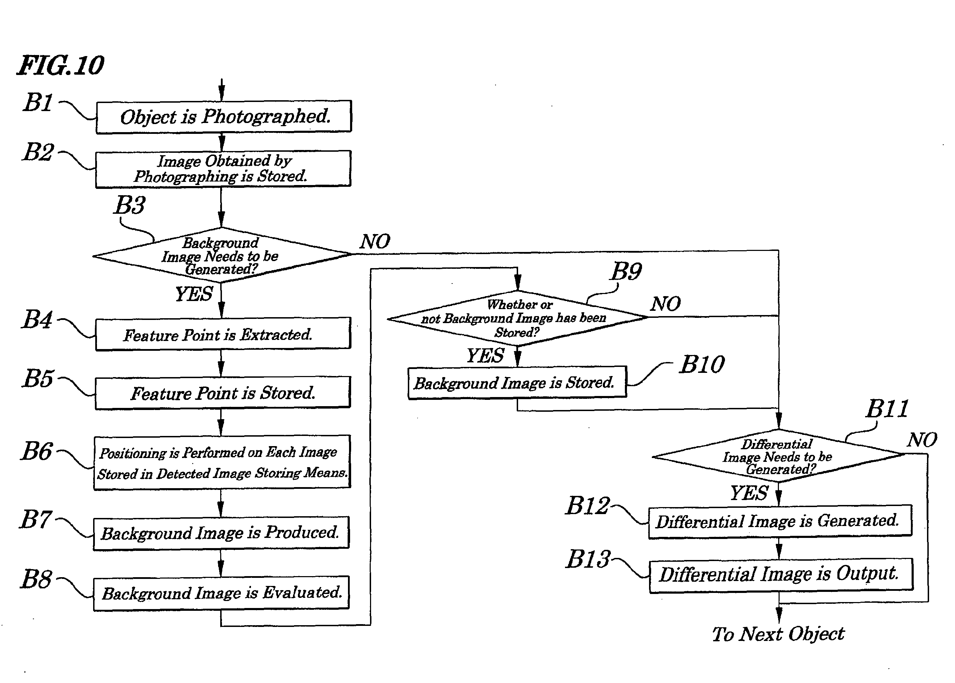

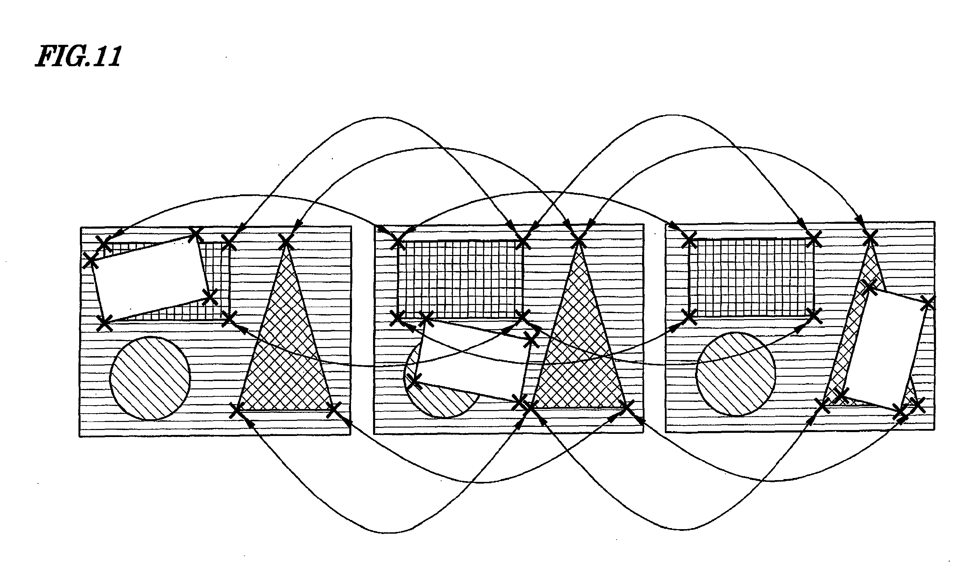

Figure 10 is a flowchart explaining operations of the label area detecting apparatus of Fig. 9. Figure 11 is a diagram to explain the positioning of a plurality of detected images using feature points.

By referring to these drawings, processing of the label area detecting method employed in the label area detecting apparatus 10A is described below. In the label area detecting apparatus 10A, processing in Steps B1, B2, and B3 is the same as the Steps A1, A2, and A3 in the second embodiment in Fig. 2. In Step B4, areas each having a specified shape being common through images are extracted by the feature point extracting means 20 from the plurality of detected images dv2 accumulated by the detected image storing means 12A to extract a feature point dp1 in each area having the common specified shape for every detected image dv2 (feature point extracting processing) . In Step B5, a position dp2 in each feature point dp1 extracted by the feature point extracting means 20 is stored by the feature point storing means 21 (feature point storing processing) . In Step B6, each of the plurality of detected images dv2 stored in the detected image storing means 12 is shifted in a specified direction by the positioning means 13A using the position dp2 of each of the feature points dp1 so that the position dp2 is made to be the same in each of the detected images (positioning processing). Then, in Steps 7 to 13, the same processes as in the Steps A5 to A11 in Fig. 2 are performed. In the above feature point extracting processing by the feature point extracting means 20, a top of each image is extracted by using the method disclosed in, for example, Non-patent reference 1 (Yasushi Kanazawa, Kenichi Kanetani, "Extraction of feature points of an image for computer vision", Journal of Institute of Electronics, Information and Communication Engineers, 2004, Vol. 87, No. 12, P.1043-1048).

Moreover, in the processing of positioning by the positioning means 13A, processing of taking out one given point from one image and of checking whether feature points exist in the neighboring area of the same coordinate in other images is performed on specified numbers of images, for example, on more than a half of the extracted feature points dp1 and, when the processing on the specified numbers of the images is completed, positioning is performed so that feature points exist on the same coordinates. In this case, for example, as shown in Fig. 11, positioning for three detected images dv2 is performed using feature points indicated by symbols "'x". Points indicated by these symbols "x" are feature points extracted when the above non-patent reference is used. There are two types of feature points, one being extracted from letter patterns of a background image and the other being extracted from an image corresponding to a label. The former is extracted from a pre-printed object and, therefore, a relative positional relation among feature points within the same image is the same for all input images. For example, a relative positional relation among three feature points extracted for three vertices of an equilateral triangle on a background image is the same for all input images. This is the same not only for the equilateral triangle but also for a rectangle existing in the left thereof and, in general, a relative positional relation among feature points, so long as they are extracted from the letter pattern on the background image, are the same not only for feature points within the same figure but also for all feature points.

Therefore, positioning is performed on each of the detected images dv2 by the positioning means 13A so that feature points dp1 are positioned. More specifically, a second piece of the detected image dv2 is moved in parallel or rotatably so that a feature point dp 1 extracted in the second piece of the detected image dv2 is superposed on a feature point dp1 extracted in the first piece of the detected image dv2. A feature point dp1 detected in the first piece of the detected image being the nearest to a feature point dp1 detected first in the second piece of the detected image is selected and the second piece of the detected image dv2 is moved in parallel so that these two feature points dp1 are superposed. Next, whether or not the feature point dp1 extracted second in the second piece of the detected image dv2 is superposed on the feature point dp1 extracted in the first piece of the detected image dv2 and, if these two feature points are superposed, the second piece of the detected image dv2 is rotated around the feature point dp1 extracted in the first piece of the detected image until the second feature point dp1 is superposed on the first feature point dp1.

By the parallel or rotational movement, checking is made as to whether or not feature points dp1 other than the first and second feature points dp1 are superposed on the feature point dp1 in the first piece of the detected image dv2. When no superposing occurs among these other feature points dp1 with respect to the first feature point dp1 in the first piece of the detected image, a feature point dp1 being the next nearest to the first feature point dp1 in the first piece of the detected image dv2 is selected and the same processing as above is repeatedly performed on these other feature points dp1. This processing enables avoidance of an erroneous positioning of a feature point dp 1 extracted to produce a background image and an erroneous positioning of a feature point dp1 obtained from an image corresponding to a label which changes its position in the detected image dv2. Thus, since a feature point is extracted also from an image corresponding to a label, there is a fear that the feature points dp1 in the first piece of the detected image dv2 do not correspond to the feature points dp1 in the second piece of the detected image dv2 in a one-to-one relationship, however, if there is a positional correspondence in some feature points dp1, positioning is made possible. By employing the same positioning process as in the case between the first and second pieces of the detected image dv2, positioning is performed on the third and thereafter pieces of the detected image dv2.

Thus, in the second embodiment, feature points dp1 of an area having a specified shape is extracted for every detected image dv2 by the feature point extracting means 20 and a position dp2 of each of the extracted feature points dp1 is stored onto the feature point storing means 21 and, by using the position dp2 of each of the feature points dp1 stored in the feature point storing means 21, positioning is performed by the positioning means 13A on a plurality of detected images dv2 stored in the detected image storing means 12A so that positions dp2 of the feature points dp1 are matched and, therefore, the same advantages as obtained in the first embodiment can be achieved by a comparatively simple positioning in the second embodiment.

Additionally, the present invention can be applied to a mail address reading and differentiating machine to handle, at one time, large pieces of mail each having the same background image but a different position for sticking an address label or a like.

It is apparent that the present invention is not limited to the above embodiments but may be changed and modified without departing from the scope of the invention.

## Claims

1. A label area detecting apparatus for detecting a label area from an image of a detecting object to part of which a label is stuck, the label area detecting apparatus **characterized by** comprising:
an image inputting and storing means to sequentially input images of a plurality of detecting objects and to store said input images as a plurality of detected images;
a background image synthesizing and producing means to produce a background image having no image of a label by using said plurality of detecting objects stored in said image inputting and storing means to fill an image of an area in which said label is stuck in one given image out of said detected images with an image of an area in which no label is stuck in other said detected images and to synthesize these images; and
a label image producing means to produce a label image corresponding to said label area by obtaining a differential image between said background image produced by said background image synthesizing and producing means and said detected image input after production of said background image.

2. The label area detecting apparatus according to Claim 1, **characterized in that** said image inputting and storing means comprises:
a photographing means to obtain said detected images by photographing an entire of each of said detecting objects; and
a detected image storing means to accumulate a plurality of detected images obtained by said photographing means,
wherein a background image synthesizing and producing means comprises:
a positioning means to shift each of said plurality of detected images accumulated in said detected image storing means in a specified direction to achieve positioning;
a background image producing means to produce said background image by using said plurality of detected objects positioned by said positioning means;
a background image evaluating means to make a check of said background images produced by said background image producing means to confirm that said background image does not contain an image corresponding to said label; and
a background image storing means to accumulate said background images confirmed by said background image evaluating means,
wherein said label image producing means comprises:
a differential image producing means to produce a differential image between said background image accumulated by said background image storing means and said detected image input to said detected image storing means after production of said background image; and
a differential image outputting means to output said differential image produced by said differential image producing means as said label image.

3. The label area detecting apparatus according to Claim 2, **characterized by** further comprising;
a feature point extracting means to extract an area having a specified common shape from said plurality of detected images accumulated in said detected image storing means and also to extract a feature point of said area having the specified shape for every detected image; and
a feature point storing means to store a position of each feature point extracted by said feature point extracting means,
wherein said positioning means is configured to position said detected images by using a position of each of said feature points stored in said feature point storing means to shift each of said plurality of detected images stored by said detected image storing means in a specified direction.

4. The label area detecting apparatus according to Claim 2 or Claim 3, **characterized in that** said background image producing means is configured to make a reference to said plurality of detected images positioned by said positioning means and to synthesize areas each having no change to produce said background image.

5. The label area detecting apparatus according to any one of Claim 2 to Claim 4, **characterized in that** in said background image evaluating means is configured to judge said background image produced by said background image producing means as a correct background image when said background image is produced by using preset specified pieces or more of said detected images.

6. The label area detecting apparatus according to any one of Claim 2 to Claim 4, **characterized in that** said background image evaluating means is configured to judge said background image produced by said background image producing means as a correct background image when there exist pixels exceeding pre-determined specified numbers in detected images each being shifted by said positioning means in a specified direction and existing in a same position as in said background image exceeding pre-determined specified numbers and being within a range of predetermined pixel values.

7. The label area detecting apparatus according to Claim 5 or Claim 8, **characterized in that** said background image evaluating means is configured to recognize said background image in an area preset in said detected image.

8. A label area detecting method to be used for a label area detecting apparatus for detecting a label area from an image of a detecting object to part of which a label is stuck, said method
**characterized by** comprising:
image input storing processing of sequentially inputting images of a plurality of detecting objects and storing said input images as a plurality of detected images;
background image synthesizing and producing processing of producing a background image having no image of a label by using said plurality of detecting objects stored in said image inputting and storing means to fill an image of an area in which said label is stuck in one given image out of said detected images with an image of an area in which no label is stuck in other said detected images and of synthesizing these images; and
label image producing processing of producing a label image corresponding to said label area by obtaining a differential image between said background image produced by said background image synthesizing and producing means and said detected image input after production of said background image.

9. The label area detecting method according to Claim 8, **characterized in that** said image input storing processing comprises:
a photographing process of obtaining said detected images by photographing an entire of each of said detecting objects; and
a detected image storing process of accumulating a plurality of detected images obtained by said photographing processing,
wherein background image synthesizing and producing processing comprises:
a positioning process of shifting each of said plurality of detected images accumulated by said detected image storing process in a specified direction to achieve positioning;
a background image producing process of producing said background image by using said plurality of detected objects positioned by said positioning process;
a background image evaluating process of making a check of said background images produced by said background image producing process of confirming that said background image does not contain an image corresponding to said label; and
a background image storing process of accumulating said background images confirmed by said background image evaluating process,
wherein said label image generating process comprises:
a differential image producing process of producing a differential image between said background image accumulated by said background image storing process and said detected image input to said detected image storing process after the production of said background image; and
a differential image outputting process of outputting said differential image produced by said differential image producing process as said label image.

10. The label area detecting method according to Claim 9, **characterized by** further comprising;
a feature point extracting process of extracting an area having a specified common shape from said plurality of detected images accumulated in said detected image storing process and also of extracting a feature point of said area having the specified shape for every detected image; and
a feature point storing process of storing a position of each feature point extracted by said feature point extracting process, wherein, in said positioning process, said detected images are positioned by using a position of each of said feature points stored by said feature point storing process to shift each of said plurality of detected images stored by said detected image storing process in a specified direction.

11. The label area detecting method according to Claim 9 or Claim 10, **characterized in that**, in said background image producing processing, a reference is made to said plurality of detected images positioned by said positioning process and areas having no change are synthesized to generate said background image.

12. The label area detecting method according to any one of Claim 9 to Claim 11, **characterized in that**, in said background image evaluating process, said background image produced by said background image generating process is judged as a correct background image when said background image is produced by using preset specified numbers or more pieces of said detected images.

13. The label area detecting method according to any one of Claim 9 to Claim 11, **characterized in that**, in said background image evaluating process, said background image produced by said background image process is judged as a correct background image when there exist pixels exceeding pre-determined specified numbers in detected images each being shifted by said positioning process in a specified direction and existing in a same position as in background images exceeding pre-determined specified numbers and being within a range of predetermined pixel values.

14. The label area detecting method according to Claim 12 or Claim 13, **characterized in that**, in said background image evaluating process, said background image in an area preset in said detected image is recognized.

15. A label area detecting control program to make a computer control the label area detecting method stated in any one of Claim 1 to Claim 7.
